# EUROPEAN PATENT SPECIFICATION

(11) **EP 2 978 822 B1**
(45) Date of publication and mention of the grant of the patent: **21.04.2021**
(21) Application number: 14718153.1
(22) Date of filing: 20.03.2014
(51) Int. Cl.: C10G 1/10, C10G 3/00, C10G 1/02, C10G 1/00, B09B 3/00

(54) **METHOD AND SYSTEM FOR HYBRID PRODUCTION OF LIQUID FUEL FROM WASTE, WITHOUT THE USE OF CATALYTIC COMPOUNDS.**
VERFAHREN UND SYSTEM FÜR HERSTELLUNG VON FLÜSSIGEM BRENNSTOFF AUS ABFALL, OHNE VERWENDUNG VON KATALYTISCHEN VERBINDUNGEN
PROCÉDÉ DE PRODUCTION DE COMBUSTIBLE LIQUIDE ET SYSTÈME DE PRODUCTION HYBRIDE À PARTIR D'UN TRAITEMENT DES DÉCHETS SANS UTILISATION DE COMPOSÉS CATALYTIQUES

(30) Priority: 27.03.2013 GR 2013100177
(43) Date of publication of application: 03.02.2016
(73) Proprietor: SOUKOS ROBOTICS E.E., 41221 Larisa (GR)
(72) Inventor: SOUKOS, Konstantinos, Larisa-Thessaloniki 41500 (GR)
(74) Representative: Panagiotidou, Effimia
(86) International application number: PCT/GR2014/000017
(87) International publication number: WO 2014/155139

(56) References cited:
- WO-A2-2009/068995
- US-A1- 2010 237 291
- US-B1- 6 845 869

## Description

The invention comes under the sector of mechanical engineering and refers to a liquid fuel method and a production hybrid system from mixed waste treatment, without using some catalytic compounds.

It also refers to a system of apparatus applying this method.

The following types belong to the category of waste:
1) Bio- degradable waste, such as food, "green" waste (e.g. plants), etc.
2) Recyclable materials such as paper, glass, aluminum and tin packaging cans, some types of plastic, etc.
3) Inert materials such as construction materials, gathered in large containers for their disposal, etc.
4) Composite materials, such as clothing, types of plastic toys, etc.
5) The so-called "dangerous household waste", such as medicine, electronic waste, paints, household sprays, fertilizer and pesticide packaging, shoes shiners, etc.
6) Special type waste such as cables, scrap cars etc.
7) Wastes from waste water treatment plants, e.g. sewage sludge.

The municipal solid waste management has become a major problem of all advanced societies, given that the contemporary way of living, characterized by the mass increase of the living standards of citizens, is considered that it amounts today to the creation of around 1, 3 kg of municipal solid waste per resident in daily basis. The increased financial and environmental needs

Due to modern lifestyle of every society, there is a large increase in energy demand which subsequently requires very high investments in energy infrastructures.

The fear of the end of world, as we know it today, from environmental pollution, led humanity to a turn to natural clean - energy sources. With the current economic and environmental issues, a pass to a model based on renewable energy, energy saving and energy demand management must be done.

Saving Energy is at the center of energy policy the next years. Saving and efficient energy management, with simultaneous development of know-how and technology, provided employment increase, are priorities. In the field of natural resources management, priority should be given to natural environment protection and to water resources management.

The new global energy "gods" is the sun, wind, water, along with biofuels. All countries of the world race against time to integrate Renewable Energy Sources in their energy potential.

The present invention constitutes a mixed waste treatment method, which combines the mechanical, UV and thermal degradation of waste.

Through ageing technical methods to material to be treated in special hybrid systems, their direct degradation is achieved, with serial classification based on material impact type contained in the waste. The necessary actions for the immediate breaking of basic chain bonds, which can take place naturally, are:
A) The high-frequency pulsatory homogenization of waste to low granulometry material in order to achieve the breaking of macromolecule main chain C-C (carbon) bonds, thereby forming free radicals
B) The irradiation of homogenated material to UV before material entering to the main reactor for properties change and given that the «imperfections» in chain structure is the weak link for depolymerization starting. Most synthetic polymers are perishable to degradation by visible light and UV radiation (changes to physical and optical properties, loss of mechanical properties, changes in molecular weight etc.)
C) The thermal degradation - thermal depolymerization. In simple cases the thermal degradation can be explained with a random or sometimes chain depolymerization mechanism. But in most cases is more complex and leads to bigger or smaller grade of depolymerization, web development, bonds and side groups change.

US 2010/237291 A1 discloses a method, apparatus and system of converting waste (in particular biomass) to liquid fuel, comprising mainly a solar-driven chemical plant. The mentioned method is regarded as being the prior art, but therefore differs essentially since it does not specifies an exposure of the waste to UV radiation prior to thermal degradation and an adjustment of ph between 4-4.5. Consequently, the method of US 2010/237291 A1, has the disadvantage of the consumption of enormous quantities of energy, since it requires more time and higher temperatures for the degradation of waste.

The application of the above method produces a liquid fuel of high quality comparable to diesel, equal to 50% of the original volume/weight of waste which were treated. The end product has a particularly high value of heat of combustion and is suitable to cover the transportation needs, the electricity consumption and heating requirements, etc.

This technology makes possible the recycling of millions of tones of house and industrial waste and also of special waste streams such as waste wire with copper, plastic parts coming from car dismantling, woody waste, packaging waste (such as plastic, rubber), sewage sludge etc. This is possible for both "fresh" and accumulated waste.

The main advantage of this method is that by combining the action of mechanical and UV degradation, the material to be treated becomes unstable and thus will be degraded faster and to lower temperature.

The invention refers also to a system of apparatus applying the method.

Waste which can be treated are:
1. Mixed municipal solid waste, which include organic materials (e.g. food residuals, paper, plastic, wood, garden waste) and inorganic materials
2. Industrial solid waste
3. Cables with copper
4. Mixed plastic waste, such as plastic packaging, plastic components of different chemical composition as PET which is very dangerous, etc
5. Tire waste
6. Woody waste, wood industries waste
7. Sewage sludge from biological purifying treatment
8. Pellets (end products) from the treatment of municipal and industrial solid waste. This refers to the product of a method and system described in Patent No. 1007756, "Cold Method and Treatment System of Municipal Solid Waste".
9. Buried waste of uncontrolled landfills
10. And generally municipal and industrial waste, before their disposal to uncontrolled landfills or landfills

A short disclosure of the method's steps and the engines' system that applies it, is described below.
Step 1: Waste entrance to the system (2)
Step 2: Waste Mechanical degradation (homogenization) in order to obtain particles of desired size less than 10cm, using homogenization high frequency pulsators system (3)
Step 3: UV Degradation - Exposure to UV radiation
Step 4: Thermal Degradation - small size waste treatment, using a continuous flow special reactor (4) for the conversion of inserting material to gaseous. Exposure to temperatures between 250-600°C
Step 5: Produced reactive gases condensation to a liquid material, using a three stage system of condensers (5). Exposure to temperatures up to 10°C.
Step 6: Automatic adjustment of end product ph between 4-4.5 and viscosity stabilization through special regulated operation systems
Step 7: Filtering of liquid material to remove viscous fraction (tar and/or coal)

The present invention can be fully understood with the help of the following detailed description, related to the attached drawings, whereas:

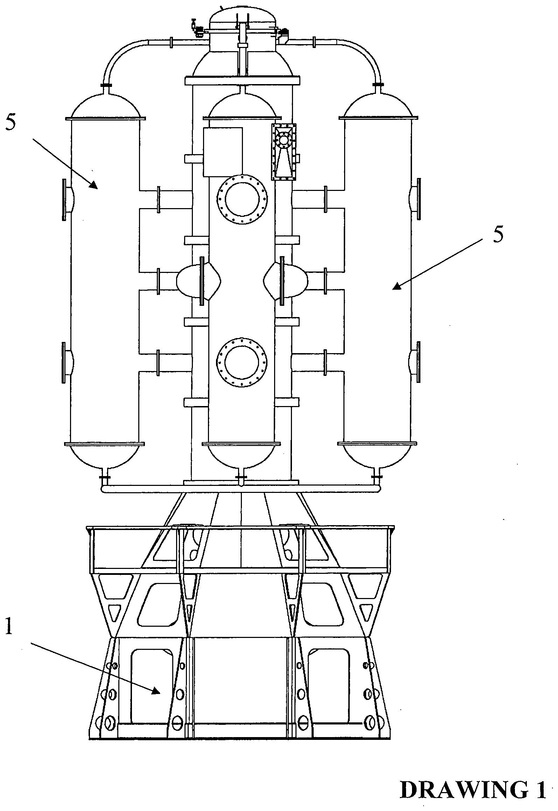

Drawing 1 presents a front view of a liquid fuel production hybrid system (1)

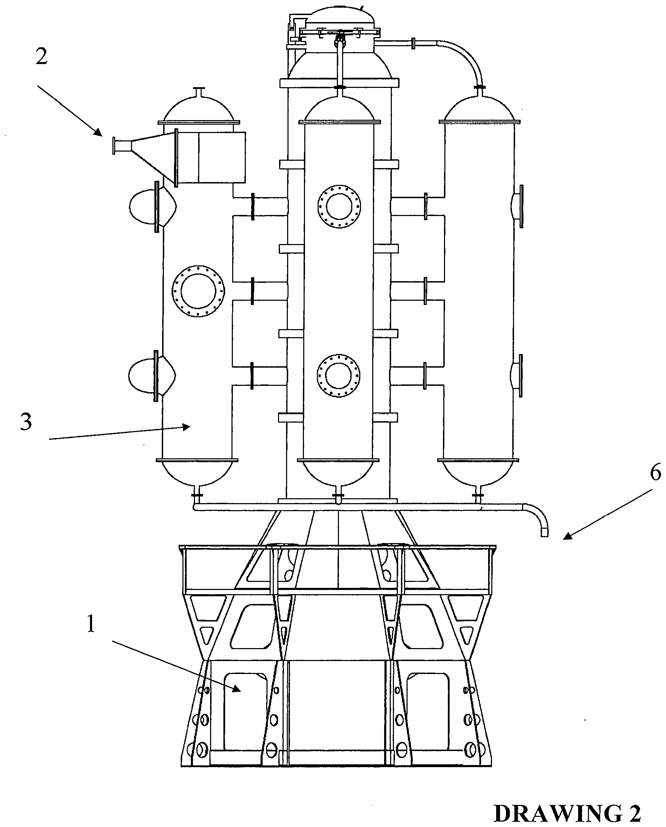

Drawing 2 presents a side view of a liquid fuel production hybrid system (1) according to the present invention

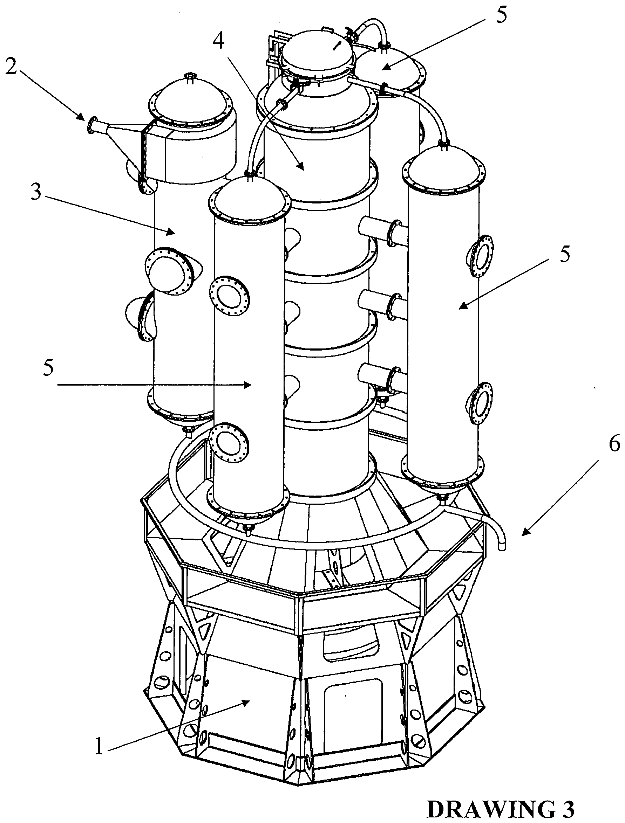

Drawing 3 presents a perspective view of a liquid fuel production hybrid system (1) according to the present invention

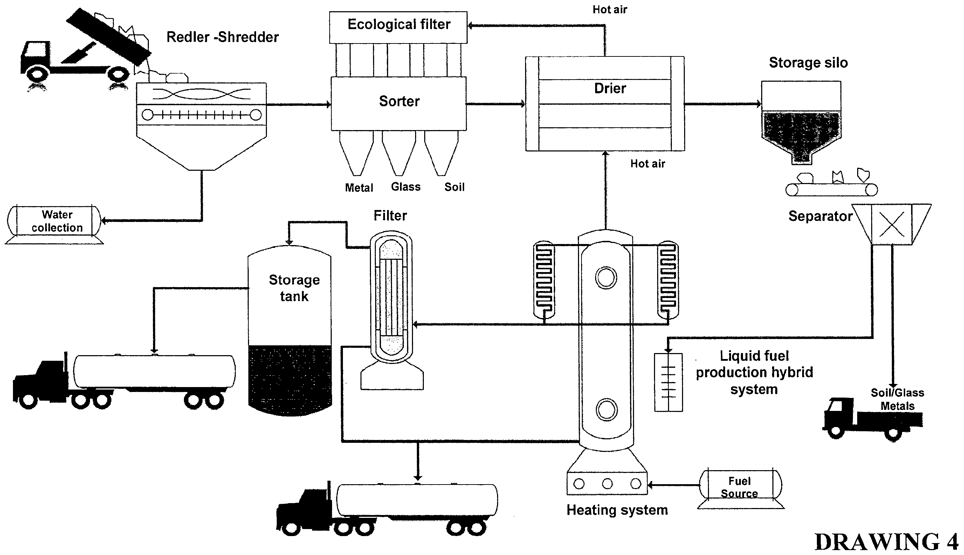

Drawing 4 presents an indicative flow diagram for the implementation of the operation of a liquid fuel production hybrid system (1) according to the present invention

An analytical description of the method and systems applying it is described below.

### Step 1: Waste entrance into the system - Transportation- waste feeding system

The entrance of waste (2) to the main system can be realized by at least two ways, depending on the form of the raw material:
1. Form of pellets (end products): Direct deposition to a first simple chain conveyor (or alternatively, belt conveyor, screw etc.) for the waste inserting to the main system, or
2. Free, uncompressed or in any other form: Direct deposition of to a first chain conveyor for the waste inserting to the main system.

On the top of the chain conveyor there is a pre- treatment chamber with integrated shredder system, which shreds and squeezes inserting waste during their transportation on the transport corridor. With the help of the chain conveyor, the small size waste is led to the next treatment stage. The shredding system which is fitted and adjusted along the surface of the chain conveyor- type redler, possesses a rotating axis with circular serrated cutting disks (knives - shredders).The cutting disks can be made of stainless steel, while the parts that bear increased mechanical loads (for example, the rotating axis are made of materials of adequate resistance. The waste, being inside or outside of bags, is transported on the chain conveyor and is led over the rotating knifes of the system, which cut the waste packaging and their content. The axis is moving in a position horizontal and parallel to the level of the chain conveyor. The vertical distance between the chain conveyor and the cutting discs is such that bulky objects can not pass without being cut, with the possibility this vertical distance to be fluctuated by the user.

The cutting of the waste takes place without the movement of the chain conveyor to be necessary to stop at any point. Depending on the waste volume, the speed of movement of the chain conveyor can be regulated, according to the known today's state of the art of electronic array of electric current measurement in the motor that rotates the cutting unit. As soon as the array detects a sudden increase of the electric current value, gives an order to the array of movement control of the chain conveyor to move slower or even to stop completely.

The existence or not of serrations on the cutting discs, the number of discs of cutting unit as well as the material they are made of, and also the distance between them are not restrictive elements for the application of the present invention and can vary according to the choice of the user.

Under the chain conveyor and lengthwise its surface, the system comprises a special tank for the drainage collection where most of the volume of liquids originating from the MSW during their insertion to the system, is collected. The sliding surface of the chain conveyor constitutes the upper part of the tank for the drainage collection. A way for the liquid drainage to be led within the tank is the sliding surface to be made of perforated sheet metal in order to allow liquid drainage to flow inside the tank

### Step 2: Mechanical degradation treatment- final homogenization using a High-Frequency Pulsators System

with desired size of less than 10cm

The material stream is then led for final homogenization in at least one high frequency pulsators system which is in at least one vertical of cylindrical section treatment pre-chamber (3), which is the main entrance of the system of the present invention.

It concerns a double treatment -robust metallic construction- that has at its sides the proper hatches and access windows to facilitate the work of the operators in case access/visit is needed.

Each homogenization high frequency pulsator is placed within a cylindrical metallic container comprising a rotating axis that comes vertically from at least two metallic supporting discs with an adequate distance between them. On their perimeter and at a proper distance from their center the support discs bear cylindrical axes, vertical to their surface, on which pulse elements are placed. The supporting discs are parallel to each other. The axes bearing and supporting the pulse elements are vertical to the supporting discs and parallel to the rotating axis. The pulse elements are placed on the axes in the space created between the supporting discs. The distance between the pulse elements is determined by a perforated rotating axis of adequate length and of cylindrical shape. The frequency of the pulses applied on the product that comes in each High Frequency Pulsator and therefore the granulometry of the pulverized material also, depend on the number of the axes bearing the pulse elements but also on the number of the pulse elements that each axis bears. The application of pulses on the product results to further shredding, the breaking of its mass and volume and the partial destruction of microorganisms.

Under the rotating axis, on the lower part of the metallic construction there is a metallic array of horizontal elements controlling the volume, which have a specific width and are situated in determined distances between them creating openings. The volume of the product must be shredded to such a degree so as to be able to enter into the openings of the horizontal control elements. As soon as the product is of desired granulometry it passes through the openings of the horizontal control elements and exits from the High Frequency Pulsators system towards the following stages of treatment.

The user has the option to modulate the pulses frequency by rotation control of by replacing the array with another with smaller or bigger openings. The choice of the adequate granulometry depends on MSW quality.

The control elements can have rectangular shape with edges from the internal side, where the edges contribute to the shredding of the material, while as internal side is considered to be the side that faces the interior of the system.

### Step 3: UV Degradation - Exposure to UV radiation

On the upper part and along the vertical processing pre-chamber (3) is placed at least one Stabilization Chamber of cylindrical shape and stable diameter, placed within robust metallic cylindrical structure, which possesses circumferentially on its the walls but also on the axis, special devices emitting UV radiation. The emission devices of UV radiation are covered with a special material for their protection. The devices emit radiation in the range of 170nm to 450nm. Thus, when we mention the photo degradation is meant primarily the effect of ultraviolet radiation, which is referred as UV-degradation.

Only the absorbed part of radiation of light leads to photochemical changes. Whether and to what extent the light absorption by the material to be treated happens, it depends on the composition of the spectrum of the incident light and on the chemical composition of the substance which receives radiation. Meaning, that for each substance, there is a range of light wavelengths where photochemical reactions take place.

By the absorption of light radiation the energy content of the macromolecule is rising, which by this way arrives in a new higher energy state. The biggest part of intake energy is consumed for the passing of electron system in a higher quantum state. The excited electron, from the layer in the basic situation of the molecule, goes to a higher unoccupied layer.

For the materials degradation, it is important that the energy difference between the excited states and the basic state is greater than the chemical bond dissociation energy. In that case, bonds C-C, C-H may break down and by this way the material degradation takes place.

Mainly for photochemical processes in polymers, very important is the possibility of transfer of excited state energy from one molecule to another, which then itself takes part in a photochemical reaction or the excitation is driving too - apart along the macromolecule.

Outdoors lifetime is determined by the near UV radiation (290-400 nm) of sunlight. The UV radiation has sufficient energy to break down a C-C bond. The wavelength that causes the maximum "damage" in a particular plastic material depends on the bonds type and for that reason the maximum degradation is achieved at different wavelengths for different types of plastic. For example, in polyethylene (PE) is approximately 300 nm, while in the polypropylene (PP) is about 370 nm.

### Step 4: Thermal waste degradation-treatment of small size particles

At this stage waste is thermally treated. Waste enters in the special continuous stirred and flow reactor (4) without the addition of catalytic compounds, where it is subjected to temperatures between 250 - 600°C for the conversion of inserting stream to gaseous mass. The applied temperatures depend on the feeding material.

The raw material enters the reactor where it is stirred continuously in order to exploit the specific surface of the particles and the effective yield of fission reactions of carbon chain.

Due to the parameters of the inventive process, the variation of the molecular weights in the reaction mixture can be restricted and therefore the end product will generally have a much higher quality than any other gas product that results from every heat treatment (pyrolysis, gasification, etc.)

Specifically, the controlled decomposition of large hydrocarbon chains takes places, under vacuum, and possibly a stable organic residue is also created.

The thermal degradation is comprised of two distinct types of reactions which occur simultaneously in the reactor. One is a random bonds fission that causes a reduction of the molecular weight of the material, and the other is a C-C bond chain edge fission which causes the end product production.

This technology is a reductive thermal process, involving the thermal decomposition of material organic components without the attendance of the oxidizing agent or catalytic compounds. The basic principle of the process is the heating of organic materials over the limit of thermal stability, resulting in the division and detachment of macromolecular compositions to stable low molecular products and solid residue.

The process then gets on in three stages:
First stage (drying stage): The drying phase is classified between the endothermic actions, when heat is consumed. This phase takes place in the temperature range up to 300°C resulting in the evaporation of moisture content of waste and of volatile components.
Second stage (Dry filtering): The dry filtering is classified as heating of raw material in temperature when from high molecular organic material side chains are separated, simpler gases are formed and solid carbonaceous residue is produced. This phase continues at temperatures of 300 up to 500°C. By temperature increasing, most volatile components are evaporated.
Third stage (Detachment): During this phase dry filtering products are detached i.e. gaseous and liquid organic substances which have been transformed. The detachment phase continues at temperature range 500 up to 600 °C when from carbon and liquid organic materials, stable gases begin to be created such as H₂, CH₄, CO etc.

The sharp increase in temperature noticeably reduces the solid residue and increases gaseous products.

Specifically, the reaction chamber (4) is comprised of a double wall (double-bottom) in order to create an outer heating mantle of its contents. By the completion of stirring, the chamber has reached the required temperature to initiate the reaction. Within the double wall, heating elements are embodied, covered with metal protective shield, which achieve the contents heating of the chamber. Through the heating system, the desired temperatures are achieved through hot gases.

The remaining solid residue (viscous fuel) is leading to treatment and upgrading within the specific filter.

The mentioned process takes place in an appropriate closed loop system, where no gaseous emissions exists.

### Step 5: Produced reaction gases condensation to liquid material, using a three stage condensers system. Exposure to temperatures below 10 °C

The produced gas mixture is led to three stage condensers dehumidification system (5), where it is conversed into a liquid fraction. By the vertical condensers system, the condensation of hot gases to liquid fuels is achieved within the tubes (by parallel flow of cooling medium within the shell).

The three stage system (5) comprises of at least three vertical cylindrical chambers, which are attached circumferentially to the main reaction chamber. The distance between the condensers is equal in order to avoid the gas static follicles formation that may cover the heat transfer surface.

Cooling and condensation takes place in three stages inside the Condenser, where the produced heat is emitted to the nearby environment (amount of hot gases used to cover part of operation energy needs).
1. In the first stage, the superheated gas is cooled to condensation temperature (below 10 °C) which corresponds to gas pressure (gas cooling).
2. In the second stage takes place the condensation of gas to liquid (of high pressure), with simultaneously emission of large amounts of heat to the environment.
3. In the third step, the liquefied medium is cooled a little longer (up to 5 °C) at a temperature lower than the condensation temperature (liquid medium thawing).

That liquid material is suitable for its energy utilization, with burning being the most obvious way.

### Step 6: Automatic adjustment of final product ph between 4-4.5 followed by viscosity stabilization, through special operating systems of regulated operation

The produced liquid (bio-oil) contains amounts of diluted water and volatile acids, which results in pH low values between 2-3. The presence of acid is the main reason for materials erosion both in storage and during application procedures. Moreover, the produced liquid by the liquefaction process is a high viscosity liquid which also causes many problems in production and storage stage.

In order to stabilize the final ph and viscosity, an automatic system of simultaneous stabilization of the two mentioned parameters, is used. Specifically, there are at least three devices, placed along the vertical perimetrical cylindrical chambers, which contain the condensing systems (5), which are attached perimetrically the main reaction chamber.

The final liquid product ph increase and stabilization between 4-4.5, is achieved through the ph special adjustment system that includes the product neutralization with regulated strong bases addition, while the viscosity reduction takes place by the addition of a suitable solvent, during the liquefaction process.

### Step 7: Filtering of liquid material to remove tar and/or coal

### The liquid end product before storage (exit -(6)) is led to a suitable - filtering-refining device and solid impurities discharge (viscous fuel) from the liquid product. This is a vertical multilayer filtering device consisting of porous media - cleaning filters.

The system of machines applying the method possesses in many points visual control systems, which have the capacity to stop the operation of the system if it is needed (e.g. in order to remove structural material of large dimensions such as iron bars etc. or an organism like animals for example, etc.).

The method and the system of machines applying this method, are a continuous operation system, with the sense that the product (the Municipal Solid Waste), enters in its initial condition and comes out directly to the final, without time-consuming procedures and in minimum period of time.

The whole operation of the system is controlled by the Control and Handling Unit, from where the user/s can supervise and control each phase of the process and each subsystem. The Control and Handling Unit is equipped with screens, computers, manual controls and anything else considered necessary for the supervision and control of the process. Where there is no possibility for the supply of electricity from the grid, the system can be supplied with electricity by a power generator, which can be powered by the produced liquid fuel- system end product (produced energy recycling contributing to the reduction of operation energy needs).

The method is applied to all above mentioned waste, which, after their initial treatment stages, are in a initial dehydration and homogenization condition, while next, in this homogenated state, the material is inserted to the reactor and a liquid material comes out. The result of application of this method is the extraction approximately of a liquid material with the following ratios:
a) 1000 kg of plastic waste give approximately 500 -700 kgs liquid product.
b) 1000 kg pellets product give approximately 300 to 500 kgs of liquid product.
c) 1000 kg mixed municipal solid waste give approximately 400 to 550 kgs of liquid product.
d) 1000 kg crumb rubber give approximately 700 kgs of liquid product

An important advantage presented by the present method is that first of all it constitutes a completely ecological treatment method of various solid waste treatment, as it does not produce emission of gaseous pollutants in the atmosphere or creation of dangerous solid and liquid residues that would require disposal in landfills (landfill for residues) and does not require the use of catalytic compounds which usually lead to production of undesirable residues and/or byproducts. All the state of the art's applied methods of MSW and/or biomass conversion to liquid fuel use some of the above means. To the contrary, the present method abolishes waste landfills and the classic incineration as a waste management method, contributes to the reuse and utilization of waste, contributes to energy recovery and therefore it does not present all the risks for the environment and humans presented by the by the current waste management practices.

Another advantage of the present method is that it converts waste streams to renewable energy sources, suitable to cover transportation energy needs, electricity consumption and heating requirements, since if previously it is properly treated to a refinery.

Another advantage of the present method is that it can be equally applied to all Municipal and Industrial Solid Waste, organics or not, without special treatment. Additional, it can be applied in various other wastes of different chemical composition as biomass, plastic waste, waste tires, wood waste, sewage sludge etc., easily and with big flexibility.

Another advantage of the present method is that its application, permits to the relatively competent entities and/or private companies to effectuate the waste management in a much more economical way. This is because the application of this method does not require the use of catalytic compounds required in other methods. Such expenses are usually big and raise operating costs of a unit to a large degree.

Furthermore, waste is directly converted to an industrial usable non-hazardous liquid material, which can be given to refineries for quality upgrading and then be distributed as biofuel.

Consequent advantage of this is that the application of this method does not overburden the environment even further since it constitutes an extremely environmental safe way of waste management, routes for waste transportation to landfills are reduced, and therefore emissions of air pollutants from landfills and/or incineration are reduced. Furthermore, the present method makes landfills redundant and eliminates them. This results to a high benefit as much for the environment, since the MSW do not remain in these areas and the aquifer is not polluted, as for the financial profit for the entities that use today the landfills, by not paying anymore the fees paid today for the use of these areas.

## Claims

1. Method for producing liquid fuel from waste treatment without the use of catalytic compounds, which through appropriate devices and high frequency technology applications, under specific operation conditions, converts waste to liquid fuel, with friendly way to environment, by executing the following steps:
1) waste entrance to the system (2) for treatment, in pellets form or free or packaged
2) mechanical degradation and homogenization treatment using high frequency pulsators system
3) material UV degradation treatment to UV radiation exposure, in the range of 170nm to 450nm
4) thermal degradation, i.e. small size waste treatment using a continuous flow special reactor (4) for the conversion of the feeding material to gaseous, exposure to temperatures between 250-600°C
5) condensation of produced reactive gases to a liquid material, using a three stage system of condensers (5), exposure to temperatures up to 10°C
6) automatic adjustment of final product pH between 4-4.5 and viscosity stabilization through special operating systems of regulated operation
7) filtering of liquid material to remove viscous fraction, tar and coal.

2. Hybrid system for producing liquid fuel from waste treatment according to the method of claim 1, comprising at least:
i. a system (2) for treatment with waste entrance;
ii. a vertical cylindrical pre-chamber (3) consisting of a high frequency pulsator system for mechanical degradation and final homogenization and a UV source in the range of 170nm to 450nm for UV degradation of the material;
iii. a continuous flow special reactor with vertical double bottom chamber (4) for thermal degradation and conversion of the feeding material to gas by exposure to temperature between 250-600°C;
iv. a three stage vertical cylindrical system of condensers (5) for condensing the produced reactive gases to a liquid material by exposure to temperature up to 10°C;
v. a system for automatically adjusting the final product ph to between 4 and 4,5 and for viscosity stabilization;
vi. a filter for filtering to remove viscous fraction (tar and/or coal).

3. Liquid Fuel production apparatus hybrid system according to claim 2, which is **characterized by** the fact that, provided the pellet form for the waste entrance is chosen, it comprises at least one simple chain conveyor, or alternatively belt conveyor, screw etc., for the feeding of waste to the main system, while if free or packaged in any other form for the waste entrance is chosen, it is **characterized by** the fact that it comprises at least one simple chain conveyor, or alternatively belt conveyor, screw etc, for the waste transportation to a treatment pre-chamber with integrated shredding system, under which there is a liquid tank with at least one special viscous pump.

4. Liquid Fuel production apparatus hybrid system according to claim 2, **characterized by** being adapted such that for the waste mechanical degradation, it is used at least one high frequency system pulsator for material homogenization which is placed in a robust metallic cylindrical construction in the vertical treatment pre-chamber (3), comprising of a rotating axis that comes vertically from at least two metallic supporting discs, which between them bear pulse elements which are mounted with a perforated axis on axes parallel to axis, while on the lower part of the metallic construction there is a metallic array of horizontal elements controlling the volume, which are situated in determined distances between them creating openings, with exit to the main vertical double-bottom thermal degradation chamber (4).

5. Liquid Fuel production apparatus hybrid system according to claim 2, **characterized by** being adapted such that for the waste UV degradation it is used at least one Stabilization Chamber of cylindrical shape and stable diameter, placed within robust metallic cylindrical structure in the vertical treatment pre-chamber (3) which possesses circumferentially on its the walls but also on the axis, special devices emitting UV radiation, those of them that are placed on the axis are covered with a special transparent material for their protection, which emit radiation in the range of 170nm to 450nm.

6. Liquid Fuel production apparatus hybrid system according to claim 2, **characterized by** being adapted such that for the waste thermal degradation a reaction chamber (4) is used which is comprised of a double wall, i. e. double-bottom, in order to create an outer heating mantle; and that the special reactor is a continuous stirred flow, where the waste is subjected to temperatures between 250 - 600°C for the conversion of feeding stream to gaseous mass; and that the mass. The raw material enters the reactor where it is stirred continuously for the large exploitation of the specific surface of the particles and the effective yield of fission reactions of carbon chain.

7. Liquid Fuel production apparatus hybrid system according to claims 2 and 6, **characterized by** being adapted such that for the thermal degradation, the use of catalytic compounds is not required, since by combining the action of mechanical and UV degradation, the material to be treated becomes unstable and thus will be degraded faster and to lower temperature.

8. Liquid Fuel production apparatus hybrid system according to claims 2, 6 and 7, **characterized by** being adapted such that the thermal degradation gets on in three stages:
first stage-drying: this phase takes place in the temperature range up to 300°C resulting in the evaporation of moisture content of waste and of volatile components,
second stage-dry filtering: this phase continues at temperatures of 300 up to 500 °C by temperature increasing, most volatile components are evaporated,
third stage-detachment: the detachment phase continues at temperature range 500 up to 600 °C where from carbon and liquid organic materials, stable gases begin to be created.

9. Liquid Fuel production apparatus hybrid system according to claims 2 and 6, **characterized by** being adapted such that the thermal degradation takes place in an appropriate closed loop system, where no gaseous emissions exit.

10. Liquid Fuel production apparatus hybrid system according to claim 2, **characterized by** being adapted such that the produced gas mixture is led to three stage condensers dehumidification system (5), where is conversed to a liquid fraction; and that the three stage system (5) comprises of at least three vertical cylindrical chambers, which are attached circumferentially to the main chamber; and that the spacing, i.e. area distance, of the condensers is equal in order to avoid the gas static follicles formation that may cover the heat transfer surface; and that the condensation process gets on three stages:
in the first stage, the superheated gas is cooled to condensation temperature, below 10 °C which corresponds to the gas pressure,
in the second stage takes place the condensation of gas to high pressure liquid, with simultaneous emission of large amounts of heat to the environment,
in the third step, the liquefied medium is cooled a little longer, up to 5°C at a temperature lower than the condensation temperature so as the liquid medium thawing to take place.

11. Liquid Fuel production apparatus hybrid system according to claim 2, **characterized by** being adapted such that the produced liquid pass through an automatic system of simultaneous stabilization of final product ph between 4-4.5 and of final viscosity; and that it concerns at least three devices, placed along the vertical cylindrical chambers, which contain the condensing systems, which are attached perimetrically the main reaction chamber.

12. Liquid Fuel production apparatus hybrid system according to claims 2 and 11, **characterized by** being adapted such that in order to increase and stabilize the final product ph between 4-4,5, a special ph adjustment system is used, that includes the product neutralization with regulated strong bases addition, and that in order to reduce the viscosity, a suitable solvent is added during the liquefaction process.

13. Liquid Fuel production apparatus hybrid system according to claim 2, **characterized by** being adapted such that the liquid end product before storage is led at least to a suitable - filtering-refining device and solid impurities discharge, i.e. viscous fuel, from the liquid product; and that it concerns a vertical multilayer filtering device consisting of porous media - cleaning filters.

## Patentansprüche

1. Verfahren zur Herstellung von flüssigem Kraftstoff aus der Abfallaufbereitung ohne die Verwendung von katalytischen Verbindungen, das durch geeignete Vorrichtungen und Hochfrequenztechnologie-Anwendungen unter bestimmten Betriebsbedingungen auf umweltfreundliche Weise Abfall in flüssigen Brennstoff umwandelt, indem die folgenden Schritte durchgeführt werden:
1) Eintritt des Abfalls in das System (2) der Abfallaufbereitung in Form von losen oder verpackten Pellets;
2) Mechanische Abbau- und Homogenisierungsbehandlung der Pellets unter Verwendung eines Hochfrequenz-Pulsator-Systems;
3) Abbaubehandlung durch UV-Strahlung im Bereich von 170 nm bis 450 nm;
4) Thermischer Abbau, d.h. Behandlung von Kleinabfällen unter Verwendung eines speziellen Reaktors mit kontinuierlichem Durchfluss (4) für die Umwandlung des zugeführten Materials in gasförmiges Material, wobei das zugeführte Material Temperaturen von 250 - 600°C ausgesetzt ist;
5) Kondensation der produzierten reaktiven Gase zu flüssigem Material vermittels eines dreistufigen Kondensatorsystems (5) unter Einwirkung von Temperaturen bis zu 10°C;
6) Automatische Regulierung des pH-Werts des Endprodukts auf 4 bis 4.5 und Stabilisierung der Viskosität durch spezielle Betriebssysteme mit geregeltem Betrieb;
7) Filterung des flüssigen Materials zur Entfernung des viskosen Anteils, des Teers und der Kohle.

2. Hybrides System zur Herstellung von flüssigem Kraftstoff aus der Aufbereitung von Abfall nach der Methode gemäß des Patentanspruchs 1, das mindestens folgende Komponenten umfasst:
i. Ein System (2) zur Abfallaufbereitung mit einem Eingangsbereich;
ii. Eine vertikale Aufbereitungsvorkammer (3) bestehend aus einem Hochfrequenz-Pulsator-System für den mechanischen Abbau und die abschließende Homogenisierung, sowie einer UV-Quelle für den Abbau des Materials mittels UV-Bestrahlung im Bereich von 170 nm bis 450 nm;
iii. Einen Spezialreaktor mit kontinuierlichem Durchfluss mit einer vertikalen Kammer mit doppeltem Boden (4) für den thermischen Abbau und die Umwandlung des zugeführten Materials in Gas, wobei das zugeführte Material Temperaturen von 250 - 600°C ausgesetzt wird;
iv. Ein dreistufiges vertikales zylindrisches Ko ndensatorsystem (5) zum Kondensieren der erzeugten reaktiven Gase zu flüssigem Material unter Einwirkung von Temperaturen bis zu 10°C;
v. Ein System zur automatischen Regulierung des pH-Werts des Endprodukts auf 4 bis 4,5 und zur Stabilisierung der Viskosität;
vi. Ein Filter zum Filtern zur Entfernung der viskosen Fraktion (Teer und / oder Kohle).

3. Apparatfür die Herstellung von flüssigem Kraftstoff durch ein Hybridsystem nach Patentanspruch 2, das **dadurch gekennzeichnet ist, dass** es, wenn die Pelletform für die Zuführung des Abfalls gewählt wird, mindestens einen einfachen Kettenförderer oder alternativ ein Förderband oder eine Förderschnecke usw. für die Zufuhr von Abfällen zum Hauptsystem umfasst, während im Falle, dass eine lose oder verpackte Form für die Abfallzuführung gewählt wird, das Hybridsystem für die Herstellung von flüssigem Kraftstoff **dadurch gekennzeichnet ist, dass** es mindestens einen einfachen Kettenförderer oder alternativ dazu ein Förderband oder eine Förderschnecke usw. für den Abfalltransport zu einer Behandlungsvorkammer mit einer integrierten Schredder-Anlage umfasst, unter der sich ein Flüssigkeitstank mit mindestens einer speziellen Dickstoffpumpe befindet.

4. Apparat für die Herstellung von flüssigem Kraftstoff durch ein Hybridsystem nach Patentanspruch 2, das **dadurch gekennzeichnet ist, dass** für den mechanischen Abbau des Abfalls mindestens ein Hochfrequenz-Pulsator-System für die Materialhomogenisierung verwendet wird, der in einer robusten metallisch-zylindrischen Konstruktion in der vertikalen Behandlungsvorkammer (3) platziert ist, bestehend aus einer rotierenden Achse, die vertikal von mindestens zwei metallischen Stützscheiben ausgeht, welche zwischen ihnen Pulselemente aufweisen, die mit einer perforierten Achse auf parallel zur Hauptachse laufenden Achsen montiert sind, während sich im unteren Teil dieser metallischen Konstruktion eine metallische Gruppe von das Volumen steuernden horizontalen Elementen befindet, die in bestimmten Abständen zwischen ihnen Öffnungen hin zur zentralen vertikalen Kammer mit Doppelboden (4) für den thermischen Abbau aufweisen.

5. Apparat für die Herstellung von flüssigem Kraftstoff durch ein Hybridsystem nach Patentanspruch 2, das **dadurch gekennzeichnet ist, dass** es so angepasst ist, dass für den UV-Abbau des Abfalls mindestens eine Stabilisierungskammer in zylindrischer Form und mit stabilem Durchmesser verwendet wird, die in einer robusten metallischen zylindrischen Struktur in der vertikalen Behandlungsvorkammer (3) platziert ist, welche ringsum an ihren Wänden aber auch auf der Achse spezielle Vorrichtungen aufweist, die UV-Licht im Bereich von 170 nm bis 450 nm emittieren, wobei diejenigen von ihnen, die sich auf der Achse befinden, zu ihrem Schutz mit einem speziellen transparenten Material bedeckt sind.

6. Apparat für die Herstellung von flüssigem Kraftstoff durch ein Hybridsystem nach Patentanspruch 2, das **dadurch gekennzeichnet ist, dass** es so angepasst ist, dass für den thermischen Abbau des Abfalls eine Reaktioskammer (4) verwendet wird, die aus einer Doppelwand, d.h. einem Doppelboden besteht, um einen äußeren Heizmantel zu erzeugen; und dass der spezielle Reaktor ein kontinuierlich nach unten gerührter Strom ist, in dem der Abfall zur Umwandlung des zugeführten Materialflusses in eine gasförmige Masse Temperaturen von 250 - 600°C ausgesetzt wird; und dadurch dass das Rohmaterial in den Reaktor eintritt, wo es kontinuierlich zur großen Ausnutzung der spezifischen Oberfläche der Teilchen und zur effektiven Ausbeute der Spaltreaktionen der Kohlenstoffkette umgerührt wird.

7. Apparat für die Herstellung von flüssigem Kraftstoff durch ein Hybridsystem nach den Patentansprüchen 2 und 6, das **dadurch gekennzeichnet ist, dass** es so angepasst ist, dass für den thermalen Abbau die Verwendung von katalytischen Verbindungen nicht erforderlich ist, da durch die Kombination von mechanischem Abbau und UV-Abbau das zu behandelnde Material instabil wird und somit schneller und bei niedrigeren Temperaturen abgebaut wird.

8. Apparat für die Herstellung von flüssigem Kraftstoff durch ein Hybridsystem nach den Patentansprüchen 2 und 6, das **dadurch gekennzeichnet ist, dass** es so angepasst ist, dass der thermische Abbau in drei Stufen verläuft:
Erste Stufe: Trocknung. Diese Phase findet in einem Temperaturbereich von bis zu 300°C statt, was zur Verdampfung des Feuchtigkeitsgehalts des Abfalls und seiner flüchtigen Bestandteile führt.
Zweite Stufe: Trockenfilterung. Diese Phase schließt sich an in einem Temperaturbereich von 300 bis 500°C, wobei durch die erhöhte Temperatur die meisten flüchtigen Bestandteile verdampfen.
Dritte Stufe: Trennung. Die Trennungsphase schließt sich an in einem Temperaturbereich von 500 bis 600°C, wobei sich aus Kohlenstoff- und anderen flüssigen organischen Materialien stabile Gase zu bilden beginnen.

9. Apparat für die Herstellung von flüssigem Kraftstoff durch ein Hybridsystem nach den Patentansprüchen 2 und 6, das **dadurch gekennzeichnet ist, dass** es so angepasst ist, dass der thermische Abbau in einem geeigneten geschlossenen Kreislaufsystem stattfindet, bei dem keine gasförmigen Emissionen austreten.

10. Apparat für die Herstellung von flüssigem Kraftstoff durch ein
Hybridsystem nach Patentanspruch 2, das **dadurch gekennzeichnet ist, dass** es so angepasst ist, dass das erzeugte Gasgemisch zu einem dreistufigen Kondensor-Entfeuchtungssystem (5) geleitet wird, wo es in eine Flüssig-Fraktion umgewandelt wird; und wobei das dreistufige System (5) mindestens drei vertikale zylindrische Kammern umfasst, die perimetrisch an der Hauptkammer angebracht sind; und wobei der Abstand, d.h. der Abstand der Flächen der Kondensoren gleich ist, um die Bildung von statischen Gasblasen zu vermeiden, welche die Wärmübertragungsfläche bedecken können; und wobei der Kondensationsprozess in drei Phasen verläuft:
In der ersten Phase wird das überhitzte Gas auf eine Kondensierungstemperatur von unter 10°C abgekühlt, welche dem Gasdruck entspricht.
In der zweiten Phase erfolgt die Kondensierung des Gases zu einer Hochdruck-Flüssigkeit statt, bei gleichzeitiger Emission großer Wärmemengen an die Umgebung.
In der dritten Phase wird das verflüssigte Medium etwas länger abgekühlt, bis zu einer Temperatur von 5°C, die unter der Kondensierungstemperatur liegt, damit das flüssige Medium auftauen kann.

11. Apparat für die Herstellung von flüssigem Kraftstoff durch ein Hybridsystem nach Patentanspruch 2, das **dadurch gekennzeichnet ist, dass** es so angepasst ist, dass die hergestellte Flüssigkeit ein automatisches System zur gleichzeitigen Stabilisierung des pH-Werts des Endproduktsauf 4 bis 4,5 und der Endviskosität durchläuft, und das mindestens drei Vorrichtungen umfasst, die entlang der vertikalen zylindrischen Kammern angeordnet sind, welche die Kondensierungssysteme enthalten, die perimetrisch an der Hauptreaktionskammer angebracht sind.

12. Apparat für die Herstellung von flüssigem Kraftstoff durch ein Hybridsystem nach den Patentansprüchen 2 und 11, das **dadurch gekennzeichnet ist, dass** es so angepasst ist, dass zur Stabilisierung des pH-Werts des Endprodukts auf 4 - 4,5 ein spezielles pH-Regulierungssystem verwendet wird, das die Produktneutralisierung mit der regulierten Zugabe von starken Basen einschließt, und bei welchem zur Verringerung der Viskosität während des Verflüssigungsprozesses ein geeignetes Lösungsmittel hinzugegeben wird.

13. Apparat für die Herstellung von flüssigem Kraftstoff durch ein Hybridsystem nach Patentanspruch 2, das **dadurch gekennzeichnet ist, dass** es so angepasst ist, dass das flüssige Endprodukt vor der Lagerung zumindest einer geeigneten Verfeinerungs-Filtriervorrichtung zugeführt wird und Festkörperverunreinigungen, d.h. viskose Brennstoffe, vom flüssigen Produkt entfernt werden, wobei es sich um eine vertikale Mehrschicht-Filtervorrichtung handelt, die aus porösen Medien - Reinigungsfiltern besteht.

## Revendications

1. Procédé de production de carburant liquide à partir du traitement des déchets, sans l'utilisation de composés catalytiques, qui, grâce à des dispositifs appropriés et des applications de technologie à haute fréquence, dans des conditions de fonctionnement spécifiques, convertit les déchets en carburant liquide, de manière écologique, en exécutant les étapes suivantes:
1) entrée des déchets dans le système (2) pour traitement sous forme de granulés soit libres soit emballés
2) traitement de dégradation mécanique et d'homogénéisation à l'aide d'un système de pulsateurs de haute fréquence
3) traitement de dégradation UV du matériau à l'exposition aux rayons UV, dans la plage de 170 nm à 450 nm
4) dégradation thermique, c'est-à-dire traitement des déchets de petite taille à l'aide d'un réacteur spécial à flux continu (4) pour la conversion du matériau d'alimentation en gaz, exposition à des températures comprises entre 250 et 600°C
5) condensation des gaz réactifs produits en un matériau liquide, à l'aide d'un système à trois étages de condenseurs (5), exposition à des températures jusqu'à 10°C
6) ajustement automatique du pH du produit final entre 4-4,5 et stabilisation de la viscosité grâce à des systèmes d'exploitation spéciaux de fonctionnement régulé
7) filtrage du matériau liquide pour éliminer la fraction visqueuse, le goudron et le charbon.

2. Système hybride de production de carburant liquide à partir du traitement des déchets selon le procédé de la revendication 1, comprenant au moins:
i. un système (2) de traitement avec entrée de déchets;
ii. une préchambre de traitement verticale (3) constituée d'un système pulsateur de haute fréquence pour la dégradation mécanique et l'homogénéisation finale et, une source UV dans la plage de 170 nm à 450 nm pour la dégradation UV du matériau;
iii. un réacteur spécial à écoulement continu avec une chambre verticale à double fond (4) pour la dégradation thermique et la conversion du matériau alimenté en gaz par exposition à une température comprise entre 250 et 600°C ;
iv. un système cylindrique vertical à trois étages de condenseurs (5) pour condenser les gaz réactifs produits en un matériau liquide par exposition à une température allant jusqu'à 10°C ;
v. un système d'ajustement automatique du pH du produit final entre 4 et 4,5 et de stabilisation de la viscosité;
vi. un filtre pour filtrer afin d'éliminer la fraction visqueuse (goudron et / ou charbon).

3. Système hybride d'appareil de production de carburant liquide selon la revendication 2, **caractérisé par le fait que**, à condition que la forme choisie pour l'entrée des déchets est celle des granulés pour, il comprend au moins un simple convoyeur à chaîne, ou, alternativement, un convoyeur à bande, une vis, etc., pour l'alimentation des déchets au système principal, alors que si la forme pour l'entrée des déchets choisie est une forme libre ou conditionnée sous toute autre forme, elle se **caractérise par le fait qu'**elle comprend au moins un simple convoyeur à chaîne, ou, alternativement, un convoyeur à bande, une vis etc., pour le transport des déchets vers une préchambre de traitement avec système de déchiquetage intégré, sous laquelle se trouve un réservoir de liquide avec au moins une pompe visqueuse spéciale.

4. Système hybride d'appareil de production de combustible liquide selon la revendication 2, **caractérisé par le fait que** pour la dégradation mécanique des déchets, on utilise au moins un système pulsateur de haute fréquence pour l'homogénéisation du matériau qui est placé dans une construction cylindrique métallique robuste dans la préchambre de traitement verticale (3), comprenant un axe de rotation qui provient verticalement d'au moins deux disques de support métalliques, qui portent entre eux des éléments d'impulsion qui sont montés avec un axe perforé sur des axes parallèles à l'axe, tandis que sur la partie inférieure de la construction métallique, il y a un étalage métallique d'éléments horizontaux contrôlant le volume, qui sont situés à des distances déterminées entre eux créant des ouvertures, avec sortie vers la chambre de dégradation thermique principale verticale à double fond (4).

5. Système hybride d'appareil de production de carburant liquide selon la revendication 2, **caractérisé par le fait qu'**il est adapté de telle sorte que pour la dégradation UV des déchets on utilise au moins une chambre de stabilisation de forme cylindrique et de diamètre fixe, placée à l'intérieur d'une structure cylindrique métallique robuste dans la préchambre de traitement verticale (3) qui possède circonférentiellement sur ses parois mais aussi sur l'axe, des dispositifs spéciaux émettant des rayons UV, avec ceux d'entre eux placés sur l'axe étant recouverts d'un matériau transparent spécial pour leur protection, qui émettent un rayonnement dans la plage de 170 nm à 450 nm.

6. Système hybride d'appareil de production de carburant liquide selon la revendication 2, **caractérisé par le fait qu'**il est adapté de telle sorte que pour la dégradation thermique des déchets on utilise une chambre de réaction (4) qui est constituée d'une double paroi, soit à double fond, afin de créer un manteau chauffantextérieur; et que le réacteur spécial est un flux continu agité, où les déchets sont soumis à des températures comprises entre 250 et 600°C pour la conversion du courant d'alimentation en masse gazeuse; et que la matière première entre dans le réacteur où elle est agitée en continu pour la grande exploitation de la surface spécifique des particules et le rendement effectif des réactions de fission de la chaîne carbonée.

7. Système hybride d'appareil de production de carburant liquide selon les revendications 2 et 6, **caractérisé par le fait qu'**il est adapté de telle sorte que pour la dégradation thermique l'utilisation de composés catalytiques n'est pas nécessaire, car en combinant l'action de dégradation mécanique et UV, le matériau à traiter devient instable et sera donc dégradé plus rapidement et à plus basse température.

8. Système hybride d'appareil de production de carburant liquide selon les revendications 2, 6 et 7, **caractérisé par le fait qu'**il est adapté pour que la dégradation thermique se fasse en trois étapes:
première étape de séchage: cette phase se déroule dans la plage de température jusqu'à 300°C entraînant l'évaporation de la teneur en humidité des déchets et des composants volatils,
deuxième étape de filtration à sec: cette phase se poursuit à des températures de 300 à 500°C par augmentation de la température, la plupart des composants volatils sont évaporés,
troisième étape de détachement: la phase de détachement se poursuit dans une plage de température de 500 à 600°C où à partir du carbone et des matières organiques liquides, des gaz stables commencent à être créés.

9. Système hybride d'appareil de production de carburant liquide selon les revendications 2 et 6, **caractérisé par le fait qu'**il est adapté de telle sorte que la dégradation thermique a lieu dans un système en boucle fermée approprié, où aucune émission gazeuse ne sort.

10. Système hybride d'appareil de production de carburant liquide selon la revendication 2, **caractérisé par le fait qu'**il est adapté de telle sorte que le mélange gazeux produit est conduit vers un système de déshumidification à trois étages à condenseurs (5), où est converti en une fraction liquide; et **par le fait que** le système à trois étages (5) comprend au moins trois chambres cylindriques verticales, qui sont fixées circonférentiellement à la chambre principale; et que l'espacement, c'est-à-dire la distance de surface, des condenseurs est égal afin d'éviter la formation de follicules gazeux statiques qui peuvent recouvrir la surface de transfert de chaleur; et que le processus de condensation se déroule en trois étapes:
dans la première étape, le gaz surchauffé est refroidi à la température de condensation, inférieure à 10°C qui correspond à la pression du gaz,
dans la deuxième étape a lieu la condensation du gaz en liquide à haute pression, avec émission simultanée de grandes quantités de chaleur dans l'environnement,
dans la troisième étape, le milieu liquéfié est refroidi un peu plus longtemps, jusqu'à 5°C à une température inférieure à la température de condensation pour que le milieu liquide dégèle.

11. Système hybride d'appareil de production de carburant liquide selon la revendication 2, **caractérisé par le fait qu'**il est adapté pour que le liquide produit passe par un système automatique de stabilisation simultanée du pH du produit final entre 4-4,5 et de la viscosité finale; et qu'il concerne au moins trois dispositifs, placés le long des chambres cylindriques verticales, qui contiennent les systèmes de condensation, qui sont fixés sur le périmètre de la chambre de réaction principale.

12. Système hybride d'appareil de production de carburant liquide selon les revendications 2 et 11, **caractérisé par le fait qu'**il est adapté de telle sorte que pour augmenter et stabiliser le pH du produit final entre 4-4,5, un système spécial d'ajustement du pH est utilisé, qui comprend la neutralisation du produit avec addition régulée de bases fortes, et qu'afin de réduire la viscosité, un solvant approprié soit ajouté pendant le processus de liquéfaction.
s

13. Système hybride d'appareil de production de carburant liquide selon la revendication 2, **caractérisé par le fait qu'**il est adapté de telle sorte que le produit final liquide avant stockage soit conduit au moins vers un dispositif de filtrage-raffinage approprié et d'évacuation des impuretés solides, c'est-à-dire du carburant visqueux, du produit liquide; et qu'il s'agit d'un dispositif de filtrage multicouche vertical constitué de milieux poreux - filtres de nettoyage.
